(19) Europäisches Patentamt / European Patent Office / Office européen des brevets

(11) **EP 3 328 693 B1**

(12) **EUROPÄISCHE PATENTSCHRIFT**

(45) Veröffentlichungstag und Bekanntmachung des Hinweises auf die Patenterteilung:
**20.01.2021 Patentblatt 2021/03**

(51) Int Cl.:
**B60T 8/1755** (2006.01) **B60T 8/176** (2006.01)

(21) Anmeldenummer: **16739088.9**

(86) Internationale Anmeldenummer:
**PCT/EP2016/066524**

(22) Anmeldetag: **12.07.2016**

(87) Internationale Veröffentlichungsnummer:
**WO 2017/016868 (02.02.2017 Gazette 2017/05)**

(54) **VERFAHREN ZUR FAHRERUNTERSTÜTZUNG BEI WASSERGLÄTTE AUF EINEM FAHRBAHNUNTERGRUND**

METHOD FOR ASSISTING DRIVERS IN THE EVENT OF AQUAPLANING ON A ROAD SURFACE

PROCÉDÉ D'AIDE À LA CONDUITE EN CAS D'AQUAPLANAGE SUR UNE CHAUSSÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.07.2015 DE 102015214176**

(43) Veröffentlichungstag der Anmeldung:
**06.06.2018 Patentblatt 2018/23**

(73) Patentinhaber: **Continental Teves AG & Co. OHG 60488 Frankfurt am Main (DE)**

(72) Erfinder:
• **RASTE, Thomas**
  **61440 Oberursel (DE)**
• **LAUER, Peter**
  **61184 Karben (DE)**
• **ECKERT, Alfred**
  **55129 Mainz-Hechtsheim (DE)**

(56) Entgegenhaltungen:
**DE-A1-102008 034 908    GB-A- 1 500 056
US-A1- 2014 195 118**

EP 3 328 693 B1

**Beschreibung**

Die Erfindung betrifft ein Verfahren zur Fahrerunterstützung bei Wasserglätte auf einem Fahrbahnuntergrund, auf dem sich ein Fahrzeug bewegt, wobei anhand von wenigstens einer fahrdynamischen Größe überprüft wird, ob Wasserglätte vorliegt. Sie betrifft weiterhin eine Vorrichtung zur Durchführung eines derartigen Verfahrens.

Bei Wasserglätte bzw. Aquaplaning kommt es zu einer Reduktion der Kräfte, die zwischen dem jeweiligen Reifen des Fahrzeuges und dem Fahrbahnuntergrund übertragen werden können. Insbesondere können die Seitenführungskräfte bzw. Querkräfte abnehmen. Trotz hoher Lenkradeinschläge führt das Fahrzeug kaum noch oder nur eingeschränkt bzw. vorwiegend durch Störungen wie z.B. Seitenwind oder Fahrbahnneigung verursachte Richtungsänderungen durch. Der vom Fahrer eingestellte Lenkwinkel korrespondiert nicht mehr zu der Bewegung des Fahrzeuges. Das Fahrzeug wird im Extremfall unlenkbar und kann schnell außer Kontrolle geraten.

Moderne Kraftfahrzeuge weisen Fahrassistenzsysteme bzw. Fahrsicherheitssysteme auf wie die querstabilisierende Fahrdynamikregelung Electronic Stability Control (ESC) und die Längsstabilisierungen wie das Antiblockiersystem ABS und das Traction Control System (TCS), die in kritischen Situationen fahrerunterstützend eingreifen und darauf abzielen, das Fahrzeug in eine fahrdynamisch stabile Situation zu überführen. So wird beispielsweise bei ESC-Eingriffen durch gezieltes Abbremsen der einzelnen Räder ein Schleudern des Fahrzeuges verhindert.

Der Regeleingriff bei bekannten ESC-Systemen beschränkt sich bei Aquaplaning auf Motor- und Bremseingriffe mit dem Ziel, die Geschwindigkeit des Fahrzeuges zu reduzieren. Wenn beide Vorderräder aufgrund von Aquaplaning keine Querkräfte bzw. Seitenführungskräfte mehr übertragen können, so ist ein Lenken bzw. eine Richtungsvorgabe mittels einer Lenkung der Vorderräder nicht möglich.

Aus der DE 10 2013 008 943 A1 ist ein Verfahren zur Fahrerassistenz bei Glätte bekannt, bei dem durch Überwachen des zeitlichen Verlaufs einer Betriebsgröße eines Lenkungssystems des Fahrzeuges festgestellt wird, ob Glätte vorliegt.

Ferner beschreibt die DE 10 2008 034 908 A1 ein Verfahren zur Stabilisierung eines Fahrzeugs bei bestehendem oder bevorstehendem Aquaplaning. Dabei wird ein Sollverhalten des Fahrzeugs bestimmt und ein Giermoment des Fahrzeugs derart erzeugt, dass ein Istverhalten des Fahrzeugs dem Sollverhalten angenähert wird.

Der Erfindung liegt die Aufgabe zugrunde, das Fahrzeug während des Auftretens von Wasserglätte bzw. Aquaplaning lenkbar zu machen. Weiterhin soll eine Vorrichtung zur Durchführung eines derartigen Verfahrens angegeben werden.

Die oben genannte Aufgabe wird erfindungsgemäß durch ein Verfahren nach Anspruch 1 sowie eine Vorrichtung nach Anspruch 15 gelöst.

Der Erfindung liegt der Gedanke zugrunde, bei Erkennen von Wasserglätte zur Ermöglichung einer Richtungssteuerung des Fahrzeuges einen Eingriff zur Korrektur der Fahrtrichtung (Richtungsänderung) durchzuführen. Der Eingriff erfolgt dabei durch das Einstellen eines Bremsdrucks an einer Hinterradbremse, wobei der Bremsdruck in Abhängigkeit von einem Fahrerlenkwunsch eingestellt wird. Erfindungsgemäß wird dabei der Eingriff insbesondere nur dann durchgeführt, wenn beidseitig Wasserglätte erkannt wird, insbesondere wenn der Schlupf beider Vorderräder außerhalb eines vorgegebenen Bereiches liegt.

Vorteilhafte Ausgestaltungen der Erfindung sind Gegenstand der Unteransprüche.

Die Erfindung geht von der Überlegung aus, dass beim Fahren im Aquaplaning Lenkraddrehungen des Fahrers die Fahrt des Fahrzeuges kaum bis gar nicht beeinflussen. Das Fahrzeug fährt weiter geradeaus oder dreht sich aufgrund einer äußeren Störung ein, ohne dass der Fahrer dies aktiv beeinflussen kann. In einer solchen Situation verzögern die Vorderräder stark, oft bis zur Drehzahl Null, insbesondere wenn sie nicht angetrieben werden. Angetriebene Räder können auch überdrehen. Ziel eines Schlupfreglers wie TCS ist in derartigen Situationen einerseits, die Drehzahl der Räder an die tatsächliche Fahrzeuggeschwindigkeit anzugleichen und andererseits die Fahrzeuggeschwindigkeit aus den gestörten Raddrehzahlsensorsignalen der Radgeschwindigkeiten möglichst präzise zu schätzen. Aus sicherheitstechnischen Gründen wäre es aber wünschenswert, dass das Fahrzeug auch bei Vorlieger von Aquaplaning steuerbar bzw. lenkbar bleibt. Dies ist allerdings aus oben genannten Gründen nicht mit Hilfe der Vorderräder realisierbar.

Wie nunmehr erkannt wurde, ist in einer derartigen Situation eine Lenkung bzw. Richtungsänderung des Fahrzeuges über die Hinterräder noch möglich, da die Hinterräder, die in der Spur der Vorderräder laufen, welche das Wasser bereits zumindest teilweise verdrängt haben, noch Kraft auf die Fahrbahn übertragen können. Das Fahrzeug kann dabei durch gezielte Bremseingriffe an den Hinterradbremsen gelenkt werden.

Bevorzugt wird bei beidseitigem Aquaplaning (beide Vorderräder zeigen Aquaplaningverhalten) ein gezielter Eingriff zur Richtungsänderung durchgeführt.

Ein Aufbau eines Bremsmoments am rechten Hinterrad erzeugt eine Drehung des Fahrzeugs nach rechts, entsprechend eines Drehens des Lenkrades im Uhrzeigersinn. Ein Aufbau eines Bremsmoments am linken Hinterrad erzeugt eine Drehung des Fahrzeugs nach links, entsprechend eines Drehens des Lenkrades gegen den Uhrzeigersinn. Vorteilhafterweise wird daher bei einem Fahrerlenkwunsch nach links an der linken Hinterradbremse ein Bremsdruck eingestellt bzw. ein Bremsmoment aufgebaut und bei einem Fahrerlenkwunsch nach rechts an der rechten Hinterradbremse ein Bremsdruck eingestellt bzw. ein Bremsmoment aufgebaut. Die Applizierung des entsprechenden Bremsmomentes führt dann zu einer Eindrehung des Fahrzeuges, wodurch das Fahrzeug gelenkt werden kann.

Der Fahrerlenkwunsch wird bevorzugt anhand des eingestellten Lenkradwinkels ermittelt. Dabei werden bevorzugt die momentane Geschwindigkeit des Fahrzeuges bzw. die Lenkwinkelkennlinie berücksichtigt. Daraus wird dann die gewünschte Drehung des Fahrzeuges berechnet, woraus ein Sollbremsmoment und daraus der einzustellende Bremsdruck berechnet werden. Je größer der eingestellte Lenkradwinkel ist, desto größer wird bevorzugt auch der Druck am jeweiligen Rad eingestellt. Bevorzugt ist dies ein proportionales Verhalten.

In einer bevorzugten Ausführungsform wird mit Hilfe einer Auswertung einer Umfeldsensorik, beispielsweise einer Kamera, ein Richtungswunsch aus der Erkennung der Fahrspur ermittelt. Nach einer weiteren bevorzugten Ausführungsform werden sowohl der eingestellte Lenkradwinkel als auch der von der Umfeldsensorik ermittelte Richtungswunsch berücksichtigt, beispielsweise anteilig kombiniert.

In einer bevorzugten Version des Verfahrens werden zusätzlich beide Hinterräder gebremst. Die zum Eingriff zur Korrektur der Fahrtrichtung überlagerte zusätzliche Bremsung erfolgt so, dass Bremsdruck in beiden Hinterradbremsen aufgebaut wird, wobei eine Bremsdruckdifferenz zwischen der rechten und linken Hinterradbremse eingestellt wird. Durch die Bremsdruckdifferenz entsteht ein Drehmoment und daraus ein Eindrehen des Fahrzeugs zur Korrektur der Fahrtrichtung. Bevorzugt wird die Bremsdruckdifferenz aus der gewünschten Drehung des Fahrzeugs berechnet. Besonders bevorzugt erfolgt die Berechnung analog zu der für ein einzelnes gebremstes Rad beschriebenen Berechnung.

Besonders bevorzugt erfolgt eine zusätzliche Bremsung beider Hinterräder nur, wenn das Kraftübertragungspotential der Hinterräder ausreichend ist (geringer Längsschlupf).

In einer vorteilhaften Ausführungsform der Erfindung erfolgt der Eingriff zur Richtungsänderung durch einen Abbau von Bremsdruck an einem der Hinterräder, wenn durch eine Bremsbetätigung des Fahrers Bremsdruck in den Hinterradbremsen bereits vorhanden ist. Ein Abbau des Bremsdrucks am linken Hinterrad erzeugt eine Drehung des Fahrzeugs nach rechts, entsprechend eines Drehens des Lenkrades im Uhrzeigersinn. Ein Abbau des Bremsdrucks am rechten Hinterrad erzeugt eine Drehung des Fahrzeugs nach links, entsprechend eines Drehens des Lenkrades gegen den Uhrzeigersinn.

In einer bevorzugten Ausführungsform wird der Schlupf der Hinterräder während der Durchführung des Verfahrens überwacht. Überschreitet der Schlupf bzw. der Betrag des Schlupfs eines gebremsten Hinterrads einen festgelegten Schwellenwert, so wird der Druckaufbau begrenzt oder herabgesetzt, um ein Blockieren der Hinterräder zu vermeiden. Besonders bevorzugt erfolgt eine Schlupfregelung nach bekannten ABS-Regelverfahren.

Bevorzugt gilt Wasserglätte bzw. Aquaplaning als erkannt, wenn der Schlupf wenigstens eines Vorderrads und/oder der über beide Vorderräder gemittelte Schlupf außerhalb eines vorgegebenen Bereichs liegt. Beidseitiges Aquaplaning gilt als erkannt, wenn der Schlupf beider Vorderräder außerhalb eines vorgegebenen Bereiches liegt. Dies kann durch einen Vergleich des Betrags mit einem Schwellenwert geschehen, oder es kann ein negativer und/oder positiver Schwellenwert definiert werden.

Bei Fahrzeugen mit Hinterradantrieb entsteht an beiden Vorderrädern bei Aquaplaning ein hoher Bremsschlupf durch den Schwallwiderstand des Wassers. Bei Fahrzeugen mit Vorderradantrieb kann starker Antriebschlupf entstehen, wenn der Fahrer auf dem "Gas" bleibt.

Bevorzugt gilt Wasserglätte auch als erkannt, wenn ein Vorderrad einen großen Bremsschlupf und das andere Rad einen großen Antriebschlupf zeigt. Besonders bevorzugt wird dies erkannt, wenn an einem Vorderrad ein positiver Schlupf über einem vorgegebenen Schwellenwert festgestellt wird und an dem anderen Vorderrad ein negativer Schlupf unter einem vorgegebenen Schwellenwert festgestellt wird.

Vorteilhafterweise umfasst die fahrdynamische Größe das Signal wenigstens eines Raddrehzahlsensors. Insbesondere ein Vergleich der Signale der den Vorderrädern zugordneten Raddrehzahlsensoren mit denen der den Hinterrädern zugeordneten Raddrehzahlsensoren ermöglicht die Bestimmung des Schlupfes der Vorderräder.

Bei einem Fahrzeug mit Hinterradlenkung wird bevorzugt die Hinterradlenkung bei Erkennen von Wasserglätte deaktiviert. Bei einem Fahrzeug, in dem eine aktive Hinterradlenkung verbaut ist, werden typischerweise im normalen Fahrbetrieb bei einer Fahrzeuggeschwindigkeit von mehr als 80 km/h die Hinterräder gleichsinnig zu den Vorderrädern eingeschlagen. Dies führt normalerweise dazu, dass das Lenken für den Fahrer mit steigender Geschwindigkeit indirekter wird und das Fahrzeug langsamer reagiert und damit präziser gesteuert werden kann. Bei vergleichbaren Lenkradausschlägen wird im höheren Geschwindigkeitsbereich der Kurvenradius größer.

Beim Vorliegen von Aquaplaning, wenn die Vorderräder keine oder nur sehr wenig Querkraft aufbauen können und damit nicht zur Lenkung des Fahrzeuges beitragen, kann dies negative Folgen für die Fahrtrichtung haben: Wenn nur die Hinterräder lenken, dreht sich das Fahrzeug daraufhin in die falsche Richtung. Der Fahrer lenkt beispielsweise nach rechts und das Fahrzeug fährt nach links. Folglich darf bei erkanntem Aquaplaning diese Richtung des Einschlags der Hinterräder auf keinen Fall erfolgen. Dazu wird in der ersten Variante die Hinterradlenkung deaktiviert, und die Hinterräder werden bevorzugt gerade ausgerichtet (der Radlenkwinkel an der Hinterachse wird im erkannten Aquaplaning dauerhaft auf null eingestellt). Dann kann durch die gezielten Bremseingriffe der Eingriff zur Richtungsänderung erfolgen.

Alternativ dazu wird bei einem Fahrzeug mit Hinterradlenkung statt des Bremseingriffes die Hinterradlenkung angesteuert und die Hinterräder werden in entgegengesetzter Richtung zur Lenkrichtung eingestellt. In diesem Fall umfasst der Eingriff zur Richtungsänderung das Einstellen der Lenkung, darüber hinaus werden bevorzugt an den Hinterrädern keine unterschiedlichen Bremsdrücke eingestellt.

Bei Erkennen von Wasserglätte wird in einer bevorzugten Ausführungsform der Radlenkwinkel der Vorderräder auf einen vorgegebenen Schwellenwert begrenzt, insbesondere bevorzugt auf 2° bis 3°. Dies kann bevorzugt betragsmäßig erfolgen, so dass also nach beiden Seiten der gleiche Schwellenwert vorgegeben wird.

Dabei wird bevorzugt während des Korrektureingriffs am Lenkrad ein Gegenmoment eingestellt. Die Lenkung wird auf diese Weise gewissermaßen verhärtet. Vorteilhafterweise beträgt das Gegenmoment ca. 2 bis 3 Nm.

Die Vorteile der Erfindung liegen insbesondere darin, dass bei Erkennen von Wasserglätte bzw. Aquaplaning durch gezielte Bremseingriffe an den Hinterradbremsen das Fahrzeug eine Richtungssteuerung ermöglicht wird, wodurch Unfälle und gefährliche Situationen verhindert werden können.

Durch eine Begrenzung des Radlenkwinkels an den Vorderrädern wird verhindert, dass das Fahrzeug bei wieder gewonnener Haftung der Vorderräder und starken Lenkeinschlag ins Schleudern kommt. Durch eine Versteifung der Lenkung wird ein zu starkes Einlenken des Fahrers verhindert.

Ein Ausführungsbeispiel der Erfindung wird anhand von Zeichnungen näher erläutert. Darin zeigen in stark schematisierter Darstellung:

FIG. 1 ein Flussdiagramm eines Verfahrens zur Fahrerunterstützung bei Wasserglätte auf einem Fahrbahnuntergrund in einem bevorzugten Ausführungsbeispiel, und

FIG. 2 eine Vorrichtung zur Durchführung eines Verfahrens zur Fahrerunterstützung in einer bevorzugten Ausführungsform, und

FIG. 3 ein Kraftfahrzeug mit den wirkenden Kräften.

Gleiche Teile sind in allen Figuren mit denselben Bezugszeichen versehen.

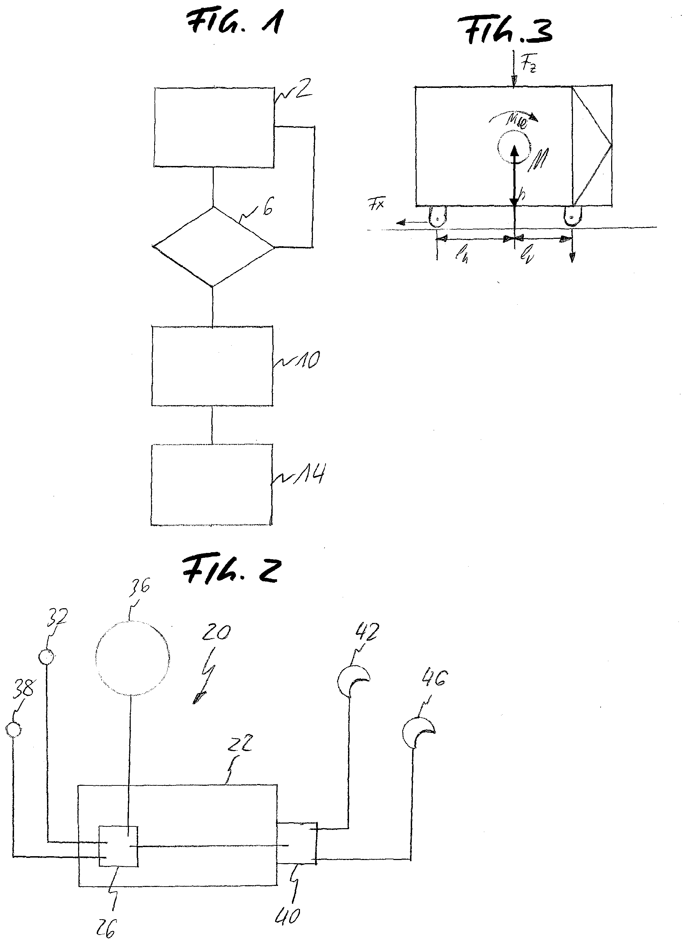

Bei einer in FIG. 1 in Form eines Flussdiagramms dargestellten bevorzugten Ausführungsbeispiels eines Verfahrens zur Fahrerunterstützung bei Vorliegen von Wasserglätte wird in einem Block 2 überprüft, ob Wasserglätte vorliegt. Dazu werden die Signale von Raddrehzahlsensoren an den Vorderrädern überprüft. Zeigen diese starken, insbesondere bei heckangetriebenen Fahrzeugen negativen und bei frontangetriebenen Fahrzeugen positiven Schlupf an, d. h. wenn der jeweilige Betrag des Schlupfes beider Vorderräder einen vorgegebenen Schwellenwert überschreitet, ohne dass gebremst wird, gilt Wasserglätte als erkannt. Der auftretende Schlupf erzeugt in beiden Fällen eine deutlich messbare Beschleunigungsänderung und eine deutliche Verzögerung des Fahrzeuges durch den auftretenden Schwallwiderstand des Wassers.

Das Vorliegen von starkem Schlupf führt dazu, dass sich zwischen Vorderrädern und Fahrbahn nur in geringem Maße oder gar nicht Seitenführungskräfte bzw. Querkräfte übertragen lassen, mit deren Hilfe dem Fahrzeug eine Richtung gegeben werden kann. Das Fahrzeug wird unlenkbar und damit unkontrollierbar.

Das vorliegende Verfahren zielt darauf ab, in diesen Situationen eine brems-unterstützte Richtungssteuerung und damit einhergehende Beherrschung des Fahrzeuges für den Fahrer zu ermöglichen. In einer Entscheidung 6 verzweigt das Verfahren unterschiedlich, je nachdem, ob in Block 2 das Vorliegen von Aquaplaning erkannt wurde oder nicht. Wurde kein Aquaplaning erkannt, verzweigt das Verfahren wieder zu Block 2, in dem wieder das Vorliegen von Aquaplaning überprüft wird.

Anderenfalls wird in einem Block 10 der Fahrerlenkwunsch mit Hilfe des vom Fahrer eingestellten Lenkradwinkels bestimmt. Davon ausgehend wird ein Sollbremsmoment bestimmt, das an einer der beiden Hinterradbremsen eingestellt werden soll. Das Sollbremsmoment wird in den an der entsprechenden Bremse aufzubauenden Bremsdruck umgerechnet.

In einem Block 14 wird nun ein Korrektureingriff durchgeführt, der vorliegend ein Bremseingriff ist. Bei einem Lenkausschlag nach rechts wird dabei an der rechten Hinterradbremse ein Bremsmoment aufgebaut, so dass sich das Fahrzeug nach rechts eindreht. Bei einem Lenkausschlag nach links wird an der linken Hinterradbremse ein Bremsmoment aufgebaut, so dass das Fahrzeug nach links eindreht. Durch diese gezielten Bremseingriffe kann das Fahrzeug gelenkt werden. Die maximale Höhe von appliziertem Bremsdruck in der jeweiligen Hinterradbremse beträgt bevorzugt 10 bis 20 bar. Durch eine Begrenzung des applizierten Bremsdruck wird die Wahrscheinlichkeit eines Blockierens der Hinterräder verringert.

In dem Fall, dass vom Fahrer zusätzlich zum Lenkwunsch auch Bremswunsch detektiert wird, wird entsprechend eine Bremsdruckdifferenz an den beiden Hinterradbremsen eingestellt, so dass gleichzeitig eine Abbremsung des Fahrzeuges und das gewünschte Eindrehen erfolgen. In jedem Fall wird bei erkanntem Aquaplaning einseitig oder beidseitig das Potential der Hinterräder ausgenutzt, um das Fahrzeug zu verzögern, wenn es in einem kritischen Geschwindigkeitsbereich ist, vorzugsweise schneller als 60 km/h.

Mit der durch die Bremsung verursachten Verzögerung wird ein Dreh-Moment um die Nickachse erzeugt, das eine zusätzliche Kraft $F_Z$ in Richtung der Normalkraft ($F_N$) an den Vorderrädern erzeugt, siehe beispielsgemäß FIG. 3. Die Zusatzkraft $F_Z$ ergibt sich in dem dort gezeigten Beispiel mit:

Bremskraft $F_X$ = 1000N
Höhe des Schwerpunkts h =0,5m
Abstand Vorderachse-Schwerpunkt $I_v$ = 1,1m
Abstand Hinterachse-Schwerpunkt $I_h$ = 1,3m
Normalkraft ohne Bremsen $F_N$ = 4000N

$$F_Z = \frac{h}{l_h + l_v} F_X = \frac{0,5}{2,4} 1000N = 208N$$

zu 208 N pro Rad, zusätzlich zur Normalkraft ohne Bremsen von 4000 N. Damit ergibt eine Gesamtkraft von 4208 N pro Vorderrad beim Bremsen. Diese Erhöhung gilt für beide Vorderräder. Damit wird eine bessere Verdrängung des Wasserfilms und damit eine verbesserte Griffigkeit der Vorderräder und damit eine bessere Lenkbarkeit des Fahrzeugs gewährleistet.

In FIG. 2 ist schematisch eine Vorrichtung 20 zur Durchführung eines oben beschriebenen Verfahrens dargestellt. Die Vorrichtung 20 umfasst einen Fahrdynamikregler 22 mit einer Steuer- und Regeleinheit 26, in der das Verfahren software- und/oder hardwaremäßig implementiert ist. Bevorzugt ist das Verfahren als Computerprogramm realisiert, das in einen Speicher der Steuer- und Regeleinheit 26 geladen wird.

Die Steuer- und Regeleinheit 26 ist signaleingangsseitig mit Raddrehzahlsensoren 32, 38 verbunden, die die beiden Vorderrädern zugeordnet sind sowie mit einem Lenkwinkelsensor 36. Sie ist signalausgangsseitig mit einer Druckbereitstellungseinrichtung 40 verbunden, die bedarfsweise in einer Hinterradbremse 42, die dem linken Hinterrad zugeordnet ist, oder einer Hinterradbremse 46, die dem rechten Hinterrad zugeordnet ist, Druck aufbaut.

Erkennt die Steuer- und Regeleinheit 26 aufgrund der Signale der Raddrehzahlsensoren 32, 38 starken Schlupf, gilt Aquaplaning als erkannt. Sie berechnet mit Hilfe des Lenkradwinkels, den sie von dem Lenkwinkelsensor 36 erhält, ein Sollbremsmoment, das in der linken bzw. der rechten Hinterradbremse 42, 46 aufgebaut wird. Das Sollbremsmoment wird dann in einen in der entsprechenden Hinterradbremse aufzubauenden Bremsdruck 42, 46 umgerechnet. Die Steuer- und Regeleinheit 26 steuert die Druckbereitstellungseinrichtung 40, die bevorzugt auch für die Betriebsbremsfunktionalität verwendet wird, an, um diesen Bremsdruck einzustellen.

Der auf diese Weise durchgeführte Korrektureingriff der Steuer- und Regeleinheit 26 wird beendet, sobald erkannt wird, dass die Vorderräder wieder Querkräfte übertragen können und der Fahrer das Fahrzeug wieder über die Lenkung steuern kann.

In der Steuer- und Regeleinheit 26 ist bevorzugt ein Fahrzeugmodell hinterlegt, beispielsweise das lineare Einspurmodell. Über eine Kamera bzw. einen optischen Sensor und/oder andere Sensoren wird der Fahrzeuggeschwindigkeitsvektor v bestimmt, und mit Hilfe des Fahrzeugmodells wird der Schwimmwinkel β bestimmt, so dass die Winkelstellung der Vorderräder (Radlenkwinkel) in Bezug auf den der Fahrzeuggeschwindigkeitsvektor bestimmt werden kann.

Wenn der Einschlagwinkel (Radlenkwinkel) der Vorderräder betragsmäßig einen vorgegebenen positiven Schwellenwert überschreitet, der vorteilhafterweise bei 2° bis 3° liegt, wird die Lenkung versteift, was durch den Aufbau eines Gegenmomentes an der EPS (Electronic Power Steering) realisiert wird. Dies begründet sich wie folgt. Wenn der Fahrer bei Vorliegen von Aquaplaning keine Reaktion des Fahrzeuges auf seine Steuersignale mit dem Lenkrad bzw. Lenkbewegungen mehr spürt, weil das Fahrzeug nicht seinem Lenkwunsch folgt, wird typischerweise ein übermäßiges Steuern bzw. Einlenken durch den Fahrer erfolgen. Dies muss verhindert werden, da der Fahrer nicht mit stark eingedrehten bzw. quer stehenden Rädern auf Fahrbahn mit Hochreibwert kommen darf. Das Fahrzeug würde in diesem Fall einen so starken Drehimpuls bekommen, dass das ESP das Schleudern des Fahrzeuges nicht mehr verhindern könnte.

In einer bevorzugten Ausführungsform der Erfindung werden die Vorderräder in Richtung des Fahrgeschwindigkeitsvektors v ausgerichtet. Vorteilhafterweise wird ein Gegenmoment am Lenkrad so eingestellt, dass die Ausrichtung der Vorderräder möglichst nahe an der Richtung des Fahrgeschwindigkeitsvektors v ist. Durch diese Maßnahme wird eine plötzliche Richtungsänderung des Fahrzeugs sobald es auf Hochreibwert kommt verhindert. Dazu ist die Bestimmung des Schwimmwinkels des Fahrzeuges notwendig. Besonders bevorzugt wird das Gegenmoment so eingestellt, dass die Ausrichtung der Vorderräder um weniger als einen vorgegebenen Schwellenwert von der Richtung des Fahrtgeschwindigkeitsvektors abweicht.

## Patentansprüche

1. Verfahren zur Fahrerunterstützung bei Wasserglätte auf einem Fahrbahnuntergrund, auf dem sich ein Fahrzeug bewegt, wobei anhand von wenigstens einer fahrdynamischen Größe überprüft wird, ob Wasserglätte vorliegt, wobei bei Erkennen von Wasserglätte, ein Eingriff zur Richtungsänderung an einer Hinterradbremse (42, 46) durchgeführt wird, wobei der Bremsdruck an der Hinterradbremse in Abhängigkeit von einem Fahrerlenkwunsch eingestellt wird, **dadurch gekennzeichnet, dass** der Eingriff, insbesondere nur, dann durchgeführt wird, wenn an beiden Vorderrädern Wasserglätte erkannt wird, insbesondere wenn der Schlupf beider Vorderräder außerhalb eines vorgegebenen Bereiches liegt.

2. Verfahren nach Anspruch 1, wobei bei einem Fahrerlenkwunsch nach links an der linken Hinterradbremse (42) der Bremsdruck aufgebaut wird und wobei bei einem Fahrerlenkwunsch nach rechts an der rechten Hinterradbremse (46) der Bremsdruck aufgebaut wird.

3. Verfahren nach Anspruch 1, wobei bei einem Fahrerlenkwunsch nach links an der rechten Hinterradbremse (42) der Bremsdruck abgebaut wird und wobei bei einem Fahrerlenkwunsch nach rechts an der linken Hinterradbremse (46) der Bremsdruck abgebaut wird.

4. Verfahren nach einem der Ansprüche 1 bis 3, wobei der Fahrerlenkwunsch mit Hilfe des vom Fahrer eingestellten Lenkradwinkels und/oder einer Umfeldsensorik ermittelt wird.

5. Verfahren nach Anspruch 4, wobei aus dem Lenkradwinkel der einzustellende Bremsdruck berechnet wird.

6. Verfahren nach Anspruch 5, wobei der einzustellende Bremsdruck proportional zum eingestellten Lenkradwinkel berechnet wird.

7. Verfahren nach einem der Ansprüche 1 bis 6, wobei dem Eingriff zur Richtungsänderung ein zusätzlicher Bremseingriff an beiden Hinterrädern zur Abbremsung des Fahrzeugs überlagert wird.

8. Verfahren nach einem der Ansprüche 1 bis 7, wobei Wasserglätte als erkannt gilt, wenn der Schlupf wenigstens eines Vorderrades und/oder der über beide Vorderräder gemittelte Schlupf außerhalb eines vorgegebenen Bereiches liegt.

9. Verfahren nach einem der Ansprüche 1 bis 8, wobei die fahrdynamische Größe das Signal wenigstens eines Raddrehzahlsensors (32, 38) umfasst.

10. Verfahren nach einem der Ansprüche 1 bis 9, wobei bei einem Fahrzeug mit Hinterradlenkung die Hinterradlenkung bei Erkennen von Wasserglätte deaktiviert wird.

11. Verfahren nach einem der Ansprüche 1 bis 10, wobei bei einem Fahrzeug mit Hinterradlenkung bei Erkennen von Wasserglätte statt des Eingriffs an der Hinterradbremse die Hinterradlenkung angesteuert wird, wobei ein Radstellwinkel der Hinterräder im Vergleich zum Fahrerlenkwunsch zur entgegengesetzten Seite erfolgt.

12. Verfahren nach einem der Ansprüche 1 bis 11, wobei bei Erkennen von Wasserglätte der Radstellwinkel der Vorderräder auf einen vorgegebenen Schwellenwert begrenzt wird.

13. Verfahren nach Anspruch 12, wobei bei Erkennen von Wasserglätte am Lenkrad mittels aktiver Lenkkraftunterstützung ein Gegenmoment zum Fahrerlenkmoment eingestellt wird.

14. Verfahren nach Anspruch 13, wobei das Gegenmoment so eingestellt wird, dass die Abweichung der Ausrichtung der Vorderräder von der Fahrtrichtung weniger als einen vorgegebenen Schwellenwert beträgt.

15. Vorrichtung (20) zur Unterstützung des Fahrers bei Wasserglätte, umfassend einen Fahrdynamikregler (22) mit einer Steuer- und Regeleinheit (26) zur Durchführung eines Verfahrens nach einem der vorherigen Ansprüche.

**Claims**

1. Method for driver assistance in the event of aquaplaning on a road surface on which a vehicle is traveling, wherein a check as regards whether aquaplaning is presently occurring is performed on the basis of at least one driving dynamics variable, wherein, in the event of aquaplaning being identified, an intervention for a change in direction is performed at a rear-wheel brake (42, 46), wherein the brake pressure at the rear-wheel brake is set in a manner dependent on a driver steering demand, **characterized in that** the intervention is performed, in particular only, when aquaplaning is identified at both front wheels, in particular if the slip of both front wheels lies outside a predefined range.

2. Method according to Claim 1, wherein, in the presence of a driver steering demand to the left, the brake pressure is built up at the left-hand rear-wheel brake (42), and wherein, in the presence of a driver steering demand to the right, the brake pressure is built up at the right-hand rear-wheel brake (46).

3. Method according to Claim 1, wherein, in the presence of a driver steering demand to the left, the brake pressure is depleted at the right-hand rear-wheel brake (42), and wherein, in the presence of a driver steering demand to the right, the brake pressure is depleted at the left-hand rear-wheel brake (46).

4. Method according to any of Claims 1 to 3, wherein the driver steering demand is determined with the aid of the steering wheel angle set by the driver and/or with the aid of a surroundings sensor arrangement.

5. Method according to Claim 4, wherein the brake pressure to be set is calculated from the steering wheel angle.

6. Method according to Claim 5, wherein the brake pressure to be set is calculated proportionally to the set steering wheel angle.

7. Method according to any of Claims 1 to 6, wherein the intervention for the change in direction has superposed thereon an additional braking intervention at both rear wheels for the braking of the vehicle.

8. Method according to any of Claims 1 to 7, wherein aquaplaning is considered to be identified if the slip of at least one front wheel and/or the slip averaged across both front wheels lies outside a predefined range.

9. Method according to any of Claims 1 to 8, wherein the driving dynamics variable comprises the signal from at least one wheel rotational speed sensor (32, 38) .

10. Method according to any of Claims 1 to 9, wherein, in the case of a vehicle with rear-wheel steering, the rear-wheel steering is deactivated in the event of aquaplaning being identified.

11. Method according to any of Claims 1 to 10, wherein, in the case of a vehicle with rear-wheel steering, in the event of aquaplaning being identified, the rear-wheel steering is activated instead of the intervention at the rear-wheel brake, wherein a wheel setting angle of the rear wheels is set toward the opposite side in relation to the driver steering demand.

12. Method according to any of Claims 1 to 11, wherein, in the event of aquaplaning being identified, the wheel setting angle of the front wheels is limited to a predefined threshold value.

13. Method according to Claim 12, wherein, in the event of aquaplaning being identified, an opposing moment in relation to the driver steering moment is set at the steering wheel by means of active steering force assistance.

14. Method according to Claim 13, wherein the opposing moment is set such that the deviation of the alignment of the front wheels from the direction of travel amounts to less than a predefined threshold value.

15. Device (20) for assisting the driver in the event of aquaplaning, comprising a driving dynamics regulator (22) with a control and regulation unit (26) for carrying out a method according to any of the preceding claims.

**Revendications**

1. Procédé d'assistance au conducteur en situation d'aquaplanage sur la chaussée sur laquelle le véhicule se déplace, le procédé détectant la situation éventuelle d'aquaplanage à l'aide d'une ou de plusieurs grandeurs dynamiques de roulage et engageant une action de changement de direction sur le frein (42, 46) d'une roue arrière en cas de présence d'une situation d'aquaplanage, la pression de freinage sur le frein de la roue arrière étant établie en fonction du souhait de braquage du conducteur, **caractérisé en ce que** l'action est engagée uniquement si une situation d'aquaplanage est détectée sur les deux roues avant et en particulier uniquement si le patinage des deux roues avant est situé hors d'une plage prédéterminée.

2. Procédé selon la revendication 1, dans lequel la pression de freinage est augmentée sur le frein (42) de la roue arrière gauche si le conducteur souhaite braquer vers la gauche et la pression de freinage est augmentée sur le frein (46) de la roue arrière droite si le conducteur souhaite braquer vers la droite.

3. Procédé selon la revendication 1, dans lequel la pression de freinage est diminuée sur le frein (42) de la roue arrière droite si le conducteur souhaite braquer vers la gauche et la pression de freinage est diminuée sur le frein (46) de la roue arrière gauche si le conducteur souhaite braquer vers la droite.

4. Procédé selon l'une des revendications 1 à 3, dans lequel le souhait de braquage du conducteur est détecté à l'aide de l'angle de braquage établi sur le volant par le conducteur et/ou à l'aide d'un ensemble de capteurs d'environnement.

5. Procédé selon la revendication 4, dans lequel la pression de freinage à établir est calculée à partir de l'angle de braquage du volant.

6. Procédé selon la revendication 5, dans lequel la pression calculée de freinage à établir est proportionnelle à l'angle de braquage établi sur le volant.

7. Procédé selon l'une des revendications 1 à 6, dans lequel une action supplémentaire sur les freins des deux roues arrière en vue de freiner le véhicule est superposée à l'action visant à modifier la direction.

8. Procédé selon l'une des revendications 1 à 7, dans lequel la présence d'une situation d'aquaplanage est détectée si le patinage d'une ou plusieurs roues avant et/ou le patinage moyen des deux roues avant sont situés hors d'une plage prédéterminée.

9. Procédé selon l'une des revendications 1 à 8, dans lequel la grandeur dynamique de roulage comporte le signal d'un ou de plusieurs capteurs (32, 38) de vitesse de rotation de roue.

10. Procédé selon l'une des revendications 1 à 9, dans lequel en cas de détection d'une situation d'aquaplanage d'un véhicule à roues arrière directrices, le braquage des roues arrière est désactivé.

11. Procédé selon l'une des revendications 1 à 10, dans lequel en cas de détection d'une situation d'aquaplanage d'un véhicule à roues arrière directrices, un braquage des roues arrière est engagé au lieu de l'action sur les freins des roues arrière, l'angle de braquage des roues arrière étant modifié sur le côté opposé au souhait de braquage du conducteur.

12. Procédé selon l'une des revendications 1 à 11, dans lequel en cas de détection d'une situation d'aquaplanage, l'action sur l'angle de braquage des roues avant est limitée à une valeur de seuil prédéterminée.

13. Procédé selon la revendication 12, dans lequel en cas de détection d'une situation d'aquaplanage, un couple opposé au couple de braquage exercé par le conducteur est établi au moyen d'une assistance active à la force de braquage.

14. Procédé selon la revendication 13, dans lequel le couple opposé est établi de telle sorte que l'écart entre l'orientation des roues avant et la direction de roulage est inférieur à une valeur de seuil prédéterminée.

15. Ensemble (20) d'assistance au conducteur en situation d'aquaplanage comprenant un régulateur (22) de dynamique du roulage doté d'une unité (26) de commande et de régulation qui exécute un procédé selon l'une des revendications qui précèdent.

# FIG. 1

# FIG. 3

# FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013008943 A1
- DE 102008034908 A1